(19) Europäisches Patentamt
European Patent Office
Office européen des brevets

(11) **EP 3 457 146 A1**

(12) **EUROPEAN PATENT APPLICATION**

(43) Date of publication:
**20.03.2019 Bulletin 2019/12**

(51) Int Cl.:
*G01P 5/10* (2006.01)       *G01P 13/00* (2006.01)

(21) Application number: **17190855.1**

(22) Date of filing: **13.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Siemens Gamesa Renewable Energy A/S**
**7330 Brande (DK)**

(72) Inventors:
• **Egedal, Per**
  **7400 Herning (DK)**

• **Enevoldsen, Peder Bay**
  **7100 Vejle (DK)**
• **Fiedel, Moritz**
  **7100 Vejle (DK)**
• **Gonzalez, Alejandro Gomez**
  **8000 Aarhus (DK)**

(74) Representative: **Aspacher, Karl-Georg**
**Siemens Gamesa Renewable Energy GmbH & Co. KG**
**Otto-Hahn-Ring 6**
**81739 München (DE)**

(54) **DETERMINING AIR FLOW CHARACTERISTIC**

(57)     It is described a method for determining a characteristic (565) of air flow close to a surface (13) of a rotating blade (11) of a wind turbine (500), the method comprising: measuring at least one value (25) of the temperature of air close to the surface (13) of the blade (11); and deriving the characteristic (565) of the air flow based on the temperature value.

FIG 2

## Description

Field of invention

The present invention relates to a method and arrangement for determining a characteristic of air flow close to a surface of a rotating blade of a wind turbine. Further, the present invention relates to a blade for a wind turbine and to a wind turbine comprising the blade and/or the arrangement. In particular, the present invention relates to a method and an arrangement for estimating the angle of attack of the flow at a given radial position of the blade, a method and an arrangement for estimating the flow speed at a given radial position and a method and an arrangement for determining the location of laminar to turbulent transition of the boundary layer at a given radial position.

Art Background

Some operational characteristics for the whole rotor of a wind turbine may be easily measured, for example the power output and the rotor speed. Other rotor characteristics such as torque or thrust may be measured via adequate load sensors such as strain gauges. Blade parameters may be measured via adequate sensors such as strain gauges (to measure local strain) or accelerometers (to measure local acceleration).

Local flow parameters at different radial positions, in contrast are normally difficult to determine, as they most commonly require sensors in the flow outside of the blade. Conventionally, pitot probes have been used for determination of local flow angle. Further, conventionally, microphones have been used for determining of laminar to turbulent boundary layer transition. Further, pressure transducers have conventionally been used for determining of local pressure distribution.

In the context of field measurements of a wind turbine, there may be several drawbacks related to flow sensors such as those mentioned above as used in conventional methods. Namely, these drawbacks may be related to for example interference of metallic elements with the lightning protection system of the turbine. Further, they may require calibration of probes, may comprise uncertainty of the measurement signals, may require complex post-processing, may not provide a sufficient reliability and robustness in harsh operational environments, may exhibit drift and may not provide long enough lifetime.

At least some of these drawbacks may not be acceptable for long-period measurements or for serial production and long period operation.

Local angle of attack (AoA) and flow speed field measurements may be particularly complicated with a pitot probe, because the presence of the air flow itself may alter the flow around it. This means that a measurement in the direct vicinity of the air flow may render a direct estimation of the angle of attack as difficult. To overcome this problem, normally a wind tunnel calibration of the probe is performed.

Thus, there may be a need for a method and for an arrangement for determining a characteristic of air flow close to a surface of a rotating blade of a wind turbine, which provides a reliable estimation of the flow characteristics and which is easily implemented. Further, there may be a need for a rotor blade for a wind turbine for which a characteristics of air flow close to a surface of the blade can be estimated in an easy manner and in a simple manner, while the blade is rotating.

The need is satisfied by the subject-matter of the independent claims. Particular embodiments of the present invention are specified in the dependent claims.

Summary of the Invention

According to an embodiment of the present invention it is provided a method for determining a characteristic of air flow close to a surface of a rotating blade of a wind turbine, the method comprising: measuring at least one value of the temperature of air close to the surface of the blade; and deriving the characteristic of the air flow based on the temperature value.

The method may be implemented in software and/or hardware. The method may be performed by a wind turbine controller, in particular by an arrangement for determining a characteristic of air flow close to the surface of a rotating blade according to an embodiment of the present invention. The method may be performed during a normal operation of the wind turbine, while the wind turbine produces electric energy and provides the electric energy to a utility grid.

The determined characteristics of the (in particular air foil affected and/or air foil not affected, i.e. free) air flow may then be utilized for appropriately controlling the wind turbine, in particular regarding setting a pitch angle and/or setting a yawing angle and/or setting a rotational speed of the rotor of the wind turbine and/or setting reference values for active power and/or reactive power and/or for setting appropriate control signals for a converter which may be connected to a generator of the wind turbine. Thus, according to an embodiment of the present invention, a method for controlling a wind turbine is provided, wherein the determined characteristics of the air flow is used to control the wind turbine.

For measuring at least one value of the temperature of air close to the surface of the blade, one or more temperature sensors installed in or at the blade, in particular such as that the temperature of the air close to the surface of the blade is measureable, may be utilized. The temperature sensor(s) may be a conventional temperature sensor(s). The at least one value of the temperature may in particular be measured close to (an expected location of) a stagnation point or a location of a stagnation point may be determined or estimated using at least one value or plural values of temperature of the air close to the surface of the blade.

In particular, a temperature field at different locations of the surface of the rotor blade may be measured and based on the temperature field or based on plural temperature values, a location of a stagnation point may be determined and a stagnation temperature may be determined.

For high-speed flows (transonic and supersonic, i.e. with speeds close to or higher than the speed of sound) it may be well-known that there is an increase of temperature of the flow in the stagnation points. Thereby, the stagnation points of the flow are those points (or regions) at which the flow (substantially) comes to rest (e.g. having zero velocity), e.g. a location close to the leading edge of an air foil of a rotor blade. The increase of the temperature at the stagnation point may be understood based on the first law of thermodynamics. In a first approximation, the process of slowing down a flow from its free speed down to zero (at the stagnation point) may be considered in thermodynamics as an isentropic process, i.e. a process where the entropy remains constant. The kinetic component of the flow entropy may be converted into a thermal component, having the effect of both increasing the pressure (which in low-speed aerodynamics is normally referred to as the stagnation pressure) as well as increasing the temperature. The increase of temperature is both dependent on the Mach number of the fluid (i.e. the ratio of the speed of the fluid to the speed of the sound in the fluid) as well as on the so-called adiabatic constant of the fluid, normally referred to as gamma. If the fluid is air, the adiabatic constant may be close to 1.4.

The determination of the location of the stagnation point and/or the determination of the stagnation temperature may be useful for estimating one or more parameters of the air flow characteristics, in particular the angle of attack and the free flow speed.

According to an embodiment of the present invention, the air flow characteristic comprises at least one of: direction of the air flow, in particular direction of the free (i.e. air foil not affected) air flow, in particular angle of attack, laminar to turbulent transition point of the (air foil affected) air flow, speed of the air flow, in particular speed the free air flow.

The direction of the (free, air foil not affected) air flow may be the direction in which the air impacts on the rotating blade, wherein the direction may be defined as a direction relative to a chord line of the rotor blade. The direction of the air flow as determined according to methods according to embodiments of the present invention may be different from the direction of the wind. The direction of the air flow relates only to the direction of the air flow close (but not so close to the surface of the blade that the direction and/or speed of the air flow is effected by the shape of the surface, thus, the airfoil of the rotor blade) to the surface of the blade which is effected by the wind direction, wind speed, rotational speed of the rotor blade.

The free air flow relates to the air flow relative to a non-existing rotor blade. The free flow speed (i.e. speed of the free air flow) may be (alternatively) determined using the wind speed, wind direction and rotational speed of the rotor without considering the geometry of the rotor blade and without using a temperature measurement. The angle of attack may be defined as the angle between the direction of the air flow close to the surface of the blade and the blade chord line.

The laminar to turbulent transition point or region of the air flow may relate to the region or the point where there is a transition between a laminar flow of the (air foil affected) air and a turbulent flow of the air, wherein the air flow is considered so close to the surface that its direction and/or speed is affected by the shape of the surface. This transition point or transition region may be located approximately between 0% and 70%, in particular 30% and 70%, of the extension of the circumferential extent of the rotor blade at the suction side or the pressure side.

The direction of the air flow may relate to the direction of the free air flow, i.e. the direction of the air flow which would be present if the rotor blade would not be present, but which is defined relative to the rotating blade.

The direction of the air flow and the speed of the air flow may relate to the direction and speed of the air relative to the rotating rotor blade. The direction of the air flow and also the speed of the air flow may be calculated based on the wind direction and wind speed as well as based on the rotational speed of the rotor blade and also the radial position at which the direction and/or speed of the air flow is to be determined. For example, direction and speed of the air flow may in a combined manner be described by an air flow vector having direction and magnitude. The air flow vector may for example be theoretically calculated as a vector addition of the wind speed vector and the negative of the vector describing the speed of the rotor blade depending on the radial position. Since the theoretical calculation of the direction and speed of the air flow may be error-prone, the method according to an embodiment of the present invention estimates or determines the direction and/or the speed of the air flow based on one or more measured temperature values which have been measured close to the surface of the blade.

Having knowledge of a reliable direction and/or speed of the air flow impacting the rotor blade, the wind turbine may advantageously be controlled in an improved manner. Also knowledge of the region or point where there is a transition between the laminar flow of the (in particular air foil affected) air flow and the turbulent flow may appropriately enable the controlling of the wind turbine, for example regarding setting the pitch angle, setting the rotational speed of the rotor, setting power output or other operational parameters.

According to an embodiment of the present invention, the method further comprises measuring at least two values of the temperature of air close to the surface of the blade at different positions of the surface, in particular close to a leading edge and/or at a pressure side and/or at a suction side of the blade; deriving the air flow characteristic based on the at least two temperature values.

In particular, the speed of the free air flow may increase with increasing distance from the rotational axis in the radial direction. The chord line of the rotor blade may be an imaginary line which may be defined in a cross-sectional view of the blade connecting the leading edge and the trailing edge of the blade. The angle of attack may be defined as the angle between this chord line and the estimated direction of the free air flow. When the temperature values are measured at different positions, for example differences in the measured temperature values may be determined from which for example a location of the stagnation point may be determined or from which a maximum difference between one of the measured temperature values and a value of the ambient temperature may be determined. From the knowledge of the location of the stagnation point or region, for example the angle of attack of the free air flow may be determined and, based on the maximum difference, the speed of the free air flow may be determined.

According to an embodiment of the present invention, deriving the air flow characteristic is further based on a geometry of the surface of the blade.

For example, when the stagnation point or location of the stagnation point has been determined, a tangent at this point on the surface of the blade may be constructed and a line orthogonal to the tangent and intercepting the location of the stagnation point may be constructed. This orthogonal line may then represent the determined direction of the free air flow and may enable to determine the angle of attack. For constructing the tangent, the knowledge of the geometry of the surface of the blade may be required.

In general, the determined characteristics of the air flow (in particular speed and/or angle of attack and/or transition point) may depend on the radial position.

According to embodiments of the present invention, the characteristic of the air flow is determined at at least one radial position or at plural radial positions. In particular, when the characteristic of the air flow is determined for one radial position, the characteristic of the air flow at other radial positions may be calculated using the geometry of the blade and the rotational speed of the rotor. Thus, knowledge of the geometry of the surface of the blade may enable to determine particular aspects of the air flow characteristic.

According to an embodiment of the present invention, the different positions at which the temperature values are measured have a substantially same radial position but different circumferential positions, in particular close to a leading edge of the blade and/or around an expected laminar to turbulent transition region.

The location of the stagnation point is expected to be close to the leading edge. Thus, measuring the temperature values at different positions around the leading edge may enable to accurately determine the location of the stagnation point which may in turn enable for determining the direction of the free air flow in a reliable and accurate manner. Furthermore, the speed or velocity of the free air flow may be accurately determined when different temperature values being measured at around the leading edge is taken into account.

Depending on the geometry of the surface of the rotor blade, the expected laminar to turbulent transition region may be located between for example 30% and 80% of a circumferential extent of the surface of the blade at the suction side and/or the pressure side. Thereby, providing temperature measurements in this expected transition region may enable to accurately determine the actual transition region or transition point which may of course depend on the radial position.

According to an embodiment of the present invention, the method comprises determining a location of a maximum difference between one of the measured temperature values and a temperature value of the ambient air; deriving a value of a direction of the air flow, in particular angle of attack as measured between the direction of the air flow and a chord line of the blade, based on the location and in particular at least on a geometry of the surface of the blade.

For example, the measured temperature values at different positions may be stored in an electronic storage and also the temperature value of the ambient air (e.g. measured with a temperature sensor not rotating with the blade, e.g. installed at a nacelle or a tower) may be stored in an electronic storage. The maximum different difference may be determined according to a conventional method. Further, the location at which the measured temperature exhibits a maximum difference relative to the temperature value of the ambient air may be determined. At the location of the maximum difference, a tangent at the surface of the rotor blade in a cross-sectional view may be constructed and the direction of the free air flow may be defined as a line orthogonal to the tangent. Thereby, the angle of attack may be conveniently determined using the method.

According to an embodiment of the present invention, a predetermined mapping between the location of the maximum difference and the angle of attack is utilized, wherein the mapping is for example stored as a table in an electronic storage. Thereby, the method may be simplified.

According to an embodiment of the present invention, the method comprises determining a value of a maximum difference between one of the measured temperature values, in particular measured at substantially same radial position, and a temperature value of the ambient air; determining a value of the speed of the air flow based on the difference.

For determining the angle of attack, the value of the maximum difference may not be required, but the location may be required at which the temperature value is measured which exhibits a maximum difference to the temperature value of the ambient air.

For determining the speed of the air flow, the value of the maximum difference may be required according to this embodiment. The maximum difference may theoretically increase as the square of the speed of the free air flow. For determining the speed of the air flow in dependence of the value of the maximum difference, a calibration may have been performed previously for example in a laboratory using an air flow channel. During the calibration, the exact shape of the curve representing the relationship between the speed of the free air flow and the maximum difference may have been determined. The calibration curve may depend on the geometry of the rotor blade surface. Alternatively, the speed of the air flow may be theoretically derived based on a known wind speed and wind direction and a known rotational speed of the rotor blade and further based on the radial position under consideration.

According to an embodiment of the present invention, the plural temperature values are measured at different, in particular different circumferential, positions on the suction surface and/or the pressure surface of the blade and are used to establish a temperature value profile across the suction and/or pressure surface, in particular at a substantially same radial position; wherein a laminar to turbulent transition point (of air foil affected air flow) is determined to be present at a location where the temperature values exhibit a largest change.

The temperature value profile may be along a circumferential direction at the suction side and/or the pressure surface of the rotor blade. Thereby, the region or point, where there is a transition from a laminar flow to a turbulent flow may accurately and reliably be determined.

According to an embodiment of the present invention it is provided an arrangement for determining a characteristic of air flow close to a surface of a rotating blade of a wind turbine, the arrangement comprising: at least one temperature sensor adapted to measure at least one value of the temperature of air close to the surface of the blade; and a processor adapted to derive the characteristic of the air flow based on the temperature value, the arrangement in particular being configured to carry out a method according to one of the preceding claims.

It should be understood that features, individually or in any combination, disclosed for a method for determining a characteristic of air flow close to a surface of a rotor blade may also be applied to an arrangement for determining a characteristic of air flow, individually or in any combination according to embodiments of the present invention. The same holds for a blade for a wind turbine.

According to an embodiment of the present invention it is provided a blade for a wind turbine, the blade comprising: a surface formed as an air foil; at least one temperature sensor, in particular installed close to a leading edge and/or at a pressure side and/or at a suction side of the blade and/or in front of and/or behind an expected location of laminar to turbulent transition point of flow, configured to measure a temperature value of air flow close to the surface.

The blade may thereby be configured to provide measurement values which enable a processor to determine a characteristic of an air flow close to a surface of the rotating blade. The temperature sensor or temperature sensors may be installed such that the air flow is not affected by the presence of the respective temperature sensor at or close to the surface of the blade.

According to an embodiment of the present invention, the one sensor comprises plural sensors, in particular an array or grid of sensors, the plural sensors comprising at least one group of sensors being arranged at a substantially same radial position but at different circumferential positions.

The sensors may comprise several groups of sensors each group comprising plural sensors being installed at substantially same radial position but different circumferential positions. Based on characteristics of the air flow at different radial positions, the controlling of the wind turbine may further be improved.

According to an embodiment of the present invention, at least one temperature sensor comprises a thermal sensitive material, wherein a resistivity of the material is a function of the temperature. The material may be a hot conductor or a cold conductor having negative temperature coefficients or positive temperature coefficients.

According to an embodiment of the present invention it is provided a wind turbine comprising at least one blade according to one of the previously described embodiments and/or an arrangement for determining a characteristic of air flow close to a surface of a rotating blade according to one of the previously described embodiments.

Embodiments of the present invention are now described with reference to the accompanying drawings. The invention is not restricted to the illustrated or described embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 illustrates a graph as considered in embodiments of the present invention;

Fig. 2 schematically illustrates a rotor blade according to an embodiment of the present invention in a schematic cross-sectional view together with temperature profiles considered in embodiments of the present invention;

Fig. 3 schematically illustrates in a cross-sectional view a rotor blade according to an embodiment of the present invention;

Fig. 4 schematically illustrates in a cross-sectional view an embodiment of another rotor blade according to an embodiment of the present invention; and

Fig. 5 schematically illustrates a wind turbine according to an embodiment of the present invention including an arrangement for determining a characteristic of air flow close to a surface of a rotating blade of the wind turbine according to an embodiment of the present invention which is adapted to carry out a method according to an embodiment of the present invention.

Detailed Description

The illustration in the drawings is in schematic form. It is noted that in different figures, similar or identical elements are provided with the same reference signs or with reference signs, which are different from the corresponding reference signs only within the first digit.

Embodiments of the present invention consider the temperature of air flow close to a surface of a rotor blade of a wind turbine. At a stagnation point where the air flow comes to a rest, the temperature increases depending on the Mach number of the fluid (i.e. the ratio of the speed of the fluid to the speed of the sound in the fluid) as well as on the so-called adiabatic constant of the fluid, normally referred to as gamma. If the fluid is air, the adiabatic constant is close to 1.4. The increase of temperature at the stagnation point relative to the static temperature of the fluid (i.e. the temperature in the free stream, in particular ambient temperature) may be expressed as:

$$\mathtt{T\ =\ T\_inf\ *\ (1\ +\ M^2\ *\ (gamma\ -\ 1)/2)}$$

where T_inf represents the free stream static temperature (i.e. the temperature value of the ambient air), M is the Mach number of the flow and gamma is the adiabatic constant of the fluid.

In a different manner, using the fact that the speed of sound is equal to sqrt (gamma * R * T), where R is the gas constant, the difference of temperature between the free stream temperature and the stagnation temperature may be written as

$$\mathtt{\Delta T\ =\ T\_inf\ *\ U\_inf^2\ *\ (gamma\ -\ 1)/(2*\ gamma\ *\ R)}$$

Thus, the increase in the temperature is proportional to the square of the free flow velocity. The increase in temperature is highest at the stagnation point (i.e. where the flow comes to rest and all kinetic energy is transformed to thermal energy/pressure).

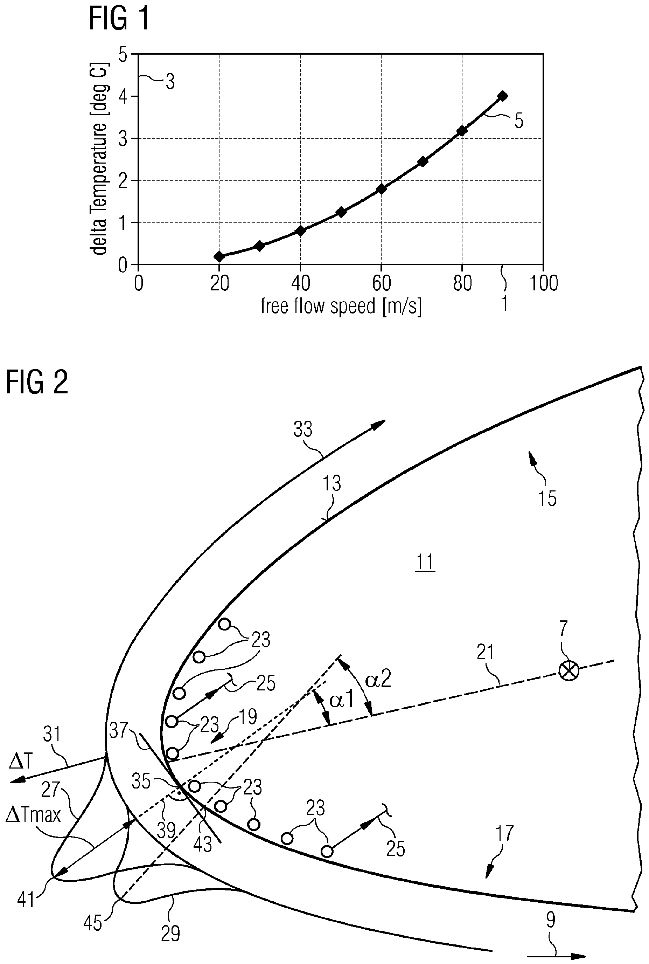

Fig. 1 illustrates in a graph having an abscissa 1 indicating the free flow speed and having an ordinate 3 indicating the difference in the temperature a curve 5 representing the dependency of the difference in temperature from the free flow speed, i.e. the speed of the free air flow. With increasing free flow speed, the difference in the temperature increases. According to an embodiment of the present invention, the estimation of the flow speed is performed indirectly via estimation of the temperature difference between the free flow and the stagnation temperature by a suitable surface measurement close to the leading edge of the rotor blade.

The incoming flow speed of a modern wind turbine, depending on the radial location, can be up to 90 m/s, meaning that the temperature differences of up to 4° may be measured. The exact temperature differences at the surface of the blade may also be dependent on the surface temperature and the cooling rates. Nevertheless, the measurement of the peak temperature at a given location compared to the temperature at neighbouring predetermined positions (or compared to the ambient temperature) may be calibrated to give an indirect measurement of the flow speed.

For performing temperature measurements which enable to determine a characteristic of air flow close to the surface of the rotating rotor blade, the present invention also provides a rotor blade, one of which is schematically illustrated in Fig. 2 in a cross-sectional view. Thereby, 7 indicates a radial direction and 9 indicates a circumferential direction. The rotor blade 11 is delimited by a surface 13 on a suction side 15 and a pressure side 17. Fig. 2 in particular illustrates the leading edge 19 of the rotor blade, while the trailing edge is not illustrated. A chord line 21 runs from the leading edge 19 to the not illustrated trailing edge. In the region of the leading edge or close to the leading edge and around the leading edge 19, plural temperature sensors 23 are installed below the surface 13 in order to not affect the air flow close to the surface 13 and in particular close to the leading edge 19. The plural temperature sensors 23 are arranged and configured to measure plural temperature values 25 which are then supplied to a processor of an arrangement for determining a characteristic of the air flow, as will be described in more detail below.

Fig. 2 has also indicated temperature profiles 27 and 29 which were derived for different angles of attack of the air flow. Thereby, the ordinate 31 indicates the difference of the measured temperature at the corresponding position and the temperature of the free air flow, in particular the ambient temperature, while the abscissa 33 indicates the location of the temperature measurement along the cross-section of the surface 13 of the rotor blade 11. For the temperature profile 27, the maximum difference in the temperature c) is observed for a temperature measurement performed at a location 35. In particular, a tangent 37 constructed at the point 35 being a tangent on the cross-section of the surface 13 is arranged such that an orthogonal line 39 intersects the maximum 41 of the temperature profile 27. In this manner, the location 35 of the stagnation point is determined.

The curve 5 illustrated in Fig. 1 may for example be obtained by measuring the maximum $\Delta T max$ of the difference in temperature for different speeds of free air flow. In turn, for a measured maximum $\Delta T max$ of a difference in temperature values, the speed of the free air flow can be determined using the curve 5 illustrated in Fig. 1.

To determine the angle of attack, the orthogonal line 39 being orthogonal to the tangent 37 intersecting the location 35 is extended and the angle included between the orthogonal line 39 and the chord line 21 is determined. This angle $\alpha 1$ represents the angle of attack and is for the illustrated measured temperature profile 27 around 8°.

For the other temperature profile 29, an analogous construction is made in order to derive the location 43 of the stagnation point and in order also to derive another angle of attack $\alpha 2$ which is in the present case around 10°.

Thus, the determination of the angle of attack $\alpha 1$, $\alpha 2$ is done via a measurement of the temperature profile 27, 29. Herein, it is not the increase of the temperature directly which is measured but the position 35, 43 at which the maximum temperature at the leading edge 19 is located. The position 35, 43 of the peak temperature varies as a function of the angle of attack $\alpha 1$, $\alpha 2$. This variation of the peak position 35, 43 with the angle of attack is schematically shown in Fig. 2. With a high fidelity surface temperature measurement, the location 35, 43 of the peak temperature 41, 45, the location 35, 43 of the peak temperature 41, 45 can be estimated and using the construction of the tangent and the orthogonal line, the angle of attack $\alpha 1$, $\alpha 2$ is calculated indirectly via a priori performed calibrations.

Such a surface temperature can be performed for example with an array or grid of temperature sensors 23, or for example with a thermal sensitive material, where the resistivity of the material is a function of the temperature combined with an appropriate method for field temperature estimation, for example a tomographic approach. The measurement may also be performed with individual sensors 23 distributed along the leading edge 19 of the rotor blade 11.

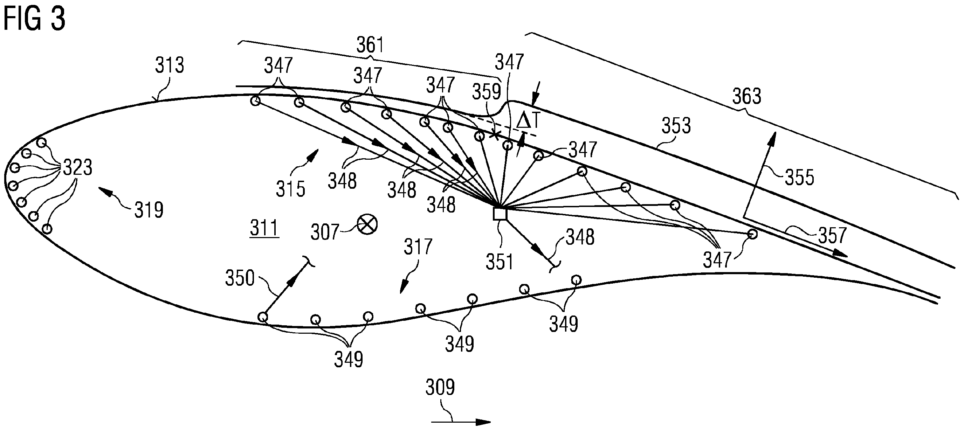

Another embodiment of the present invention allows to determine the position along the chord line 21 of the so-called laminar to turbulent transition. The rotor blade 311 schematically illustrated in Fig. 3 in a cross-sectional view along the radial direction 307 according to an embodiment of the present invention comprises for this purpose plural temperature sensors 347 at the suction side 315 and may, optionally, also comprise further plural temperature sensors 349 at the pressure side 317. Optionally, the rotor blade 311 may further comprise plural temperature sensors 323 close to the leading edge 319 for determining angle of attack and/or free flow speed, as has been explained with reference to Fig. 2.

The plural temperature sensors 347 at the suction side 315 measure the temperature and the different positions along the circumferential direction 309 and supply respective measurement signals 348 to a respective transfer module 351 which may for example be mounted within the inside of the rotor blade 311. The transfer module 351 may then forward the measurement signals 348 to a processor of an arrangement for determining the flow characteristics.

Fig. 3 further illustrates the temperature profile 353 as determined using the plural temperature sensors 347. Thereby, the ordinate 355 indicates the temperature while the abscissa 357 indicates the location along the cross-section of the surface 313. As can be appreciated from the curve 353, the temperature abruptly increases at a location 359 which is therefore identified as the point of transition between the laminar flow and the turbulent flow of the air. Thus, the position 359 on the suction side 315 (and the pressure side 317) of the airfoil 313 is the position at which the flow within the boundary layer changes from a laminar regime (with almost no interaction between different flow layers) to a turbulent regime (with high interaction and energy/momentum exchange between the different flow layers). Due to precisely this high rate of energy and momentum exchange in the turbulent portion of the boundary layer, the heat transfer coefficient between the surface of the airfoil and the outer flow is higher than in the laminar portion 361 of the boundary layer. The turbulent portion is indicated with reference sign 363. The difference in heat transfer coefficients has the effect of cooling more (in case the air flow is cooler than the airfoil) or heating more (in case the air flow is warmer than the airfoil) the turbulent portion 363 of the airfoil surface 313. The effect of this is that there will appear a temperature change ΔT between the laminar portion 361 and the turbulent portion 363 of the airfoil 313. According to an embodiment of the present invention, the location 359 at which this temperature change ΔT (e.g. where the derivative of the profile 363 with respect to the position 357 along the surface 313 is highest) is detected can be directly correlated with the location of the transition.

The surface temperature measurement may be performed via an arrangement of temperature sensors 347 on the suction side and the pressure side of the airfoil covering areas both in front of and behind the expected location of transition. The exact location of transition may depend both on the angle of attack as well as on the Reynolds number, as well as on the soiling state (degree of dirt on the airfoil) of the upstream flow (for example caused by dirt, bugs, salt or ice among others).

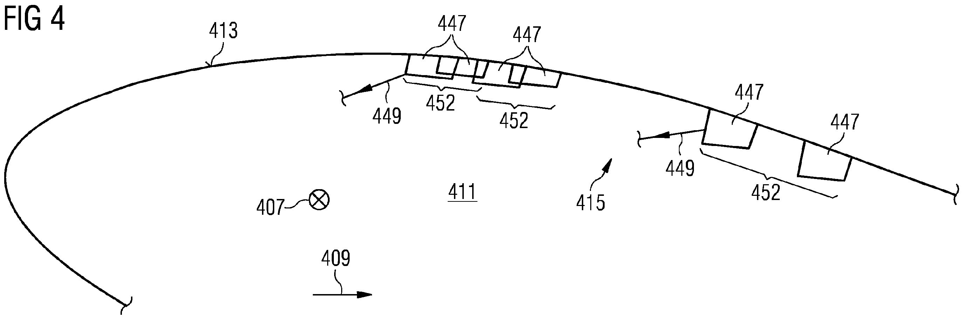

Fig. 4 schematically illustrates another embodiment of a rotor blade 411 according to an embodiment of the present invention in a cross-sectional view along the radial direction 409. Herein, pairs 452 of temperature sensors 447 are installed on or at the suction side 415 of the rotor blade 411. Each pair 452 comprises thus two temperature sensors 447 which are spaced apart in the circumferential direction 409. When a processor detects a great difference between the measurement values of temperature sensors 447 of one pair 448, the processor may determine that the transition point of the transition between the laminar flow and the turbulent flow is between the two respective temperature sensors 447.

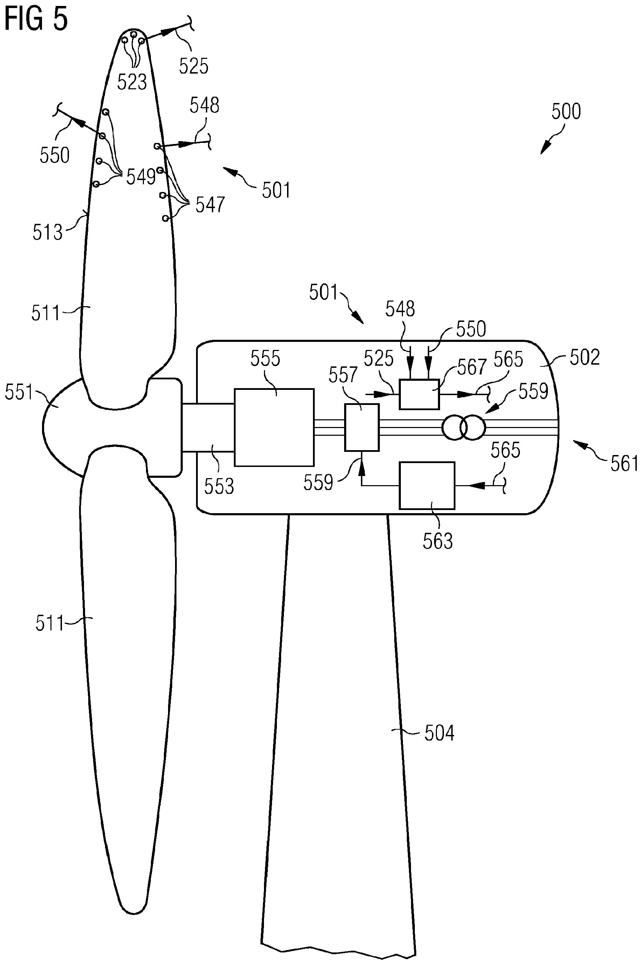

Fig. 5 schematically illustrates a wind turbine 500 according to an embodiment of the present invention which comprises an arrangement 501 for determining a characteristic of air flow close to a surface of a rotating blade of the wind turbine 500 according to an embodiment of the present invention. Thereby, the wind turbine 500 comprises at least one rotor blade 511 which is connected to a hub 551 which is connected to a rotation shaft 553. The rotation shaft drives a generator 555 which generates upon rotation of the rotation shaft 553 electric energy which is supplied for example to a converter 557 which converts the variable frequency power stream to a fixed frequency power stream, for example three-phase power stream. The three-phase power stream is transformed using a transformer 559 to higher voltage and output at output terminals 561 which may supply the power stream to a not illustrated utility grid. The converter is controlled by a controller 563 which may supply appropriate pulse width modulation signals to power switches comprised within the converter 557.

Thereby, the controller receives operational parameters which also include a characteristics 565 of the air flow which is determined by the processor 567 which is part of the arrangement 501 for determining the characteristic of the air flow. Thereby, the arrangement 501 further comprises plural temperature sensors 523, 547, 549 which may be installed on the rotor blade 501 for example as is illustrated in Figs. 2, 3 and 4. The processor 567 receives the measurement signal 548, 525 and/or 550 and derives therefrom the characteristic of the air flow, for example determines angle of attack, point of a transition from a laminar flow to a turbulent flow and/or the speed of the free air flow. Based on the characteristic 565 of the air flow, the controller 563 derives control signals 569 which control the converter 557.

The wind turbine comprises a nacelle 502 which harbours the generator 555, the converter 557, the arrangement or the processor 547 and the controller 563. The nacelle 502 is mounted on top of a wind turbine tower 504.

According to an embodiment of the present invention, the three temperature-based measurement methods disclosed above may be used together or individually, at a single or multiple locations of a rotor blade. The information obtained from these measurements in the form of angle of attack, flow speed and transition locations at different radial positions may be used indirectly to improve the performance of the turbine for example by

- tailoring the operation characteristics to adapt to the current flow states and thereby improve AEP
- work as feedback signals for the control of a pitch system or an individual pitch control system and thereby help in reducing loads/tailoring loads so side-specific conditions
- work as feedback signals for the control of active elements on the rotor blade such as flaps or spoilers and thereby help to improve loads/tailor loads to side-specific conditions
- give information on azimuthal flow variations such as wind shear
- be used to estimate the level of loading of the turbine.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for determining a characteristic (565) of air flow close to a surface (13) of a rotating blade (11) of a wind turbine (500), the method comprising:

> measuring at least one value (25) of the temperature of air close to the surface (13) of the blade (11); and
> deriving the characteristic (565) of the air flow based on the temperature value.

2. Method according to the preceding claim, wherein the air flow characteristic comprises at least one of:

> direction of the air flow, in particular direction of the free air flow, in particular angle of attack ($\alpha$1, $\alpha$2),
> laminar to turbulent transition point (359) of the air flow,
> speed of the air flow (5), in particular speed the free air flow.

3. Method according to one of the preceding claims, comprising:

> measuring at least two values (25, 348, 350) of the temperature of air close to the surface of the blade at different positions of the surface, in particular close to a leading edge (19) and/or at a pressure side (17) and/or at a suction side (15) of the blade (11);
> deriving the air flow characteristic based on the at least two temperature values.

4. Method according to one of the preceding claims, wherein deriving the air flow characteristic is further based on a geometry of the surface (13) of the blade (11).

5. Method according to one of the preceding claims, wherein the different positions at which the temperature values are measured have a substantially same radial position but different circumferential positions, in particular close to a leading edge (19) of the blade and/or around an expected laminar to turbulent transition region (359).

6. Method according to one of the preceding claims, comprising:

> determining a location (35, 43) of a maximum difference between one of the measured temperature values and a temperature value of ambient air;
> deriving a value of a direction of the air flow, in particular angle of attack ($\alpha$1, $\alpha$2) as measured between the direction (39) of the air flow and a chord line (21) of the blade, based on the location (35) and in particular at least on a geometry of the surface (13) of the blade.

7. Method according to the preceding claim,
wherein a predetermined mapping between location of the maximum difference and the angle of attack is used.

8. Method according to one of the preceding claims, comprising:

> determining a value ($\Delta$T) of a maximum difference between one of the measured temperature values, in particular measured at substantially same radial position, and a temperature value of the ambient air;
> determining a value of the speed (5) of the air flow based on the maximum difference.

9. Method according to one of the preceding claims, wherein the plural temperature values are measured at different, in particular different circumferential, positions on the suction surface (315) and/or the pressure (317) surface of the blade and are used to establish a temperature value profile (353) across the suction and/or pressure surface, in particular at a substantially same radial position;
wherein a laminar to turbulent transition point (359) is determined to be present at a location where the temperature values exhibit a largest change ($\Delta$T).

10. Arrangement (501) for determining a characteristic of air flow close to a surface of a rotating blade (511) of a wind turbine (500), the arrangement comprising:

> at least one temperature sensor (523, 549, 547) adapted to measure at least one value of the temperature of air close to the surface of the blade; and
> a processor (567) adapted to derive the characteristic (565) of the air flow based on the temperature value, the arrangement in particular being configured to carry out a method according to one of the preceding claims.

11. Blade (11, 311, 411, 511) for a wind turbine (500), the blade comprising:

a surface (13, 313, 413, 513) formed as an air foil;

at least one temperature sensor (523, 549, 547), in particular installed close to a leading edge and/or at a pressure side and/or at a suction side of the blade and/or in front of and/or behind an expected location of laminar to turbulent transition point of flow, configured to measure a temperature value of air flow close to the surface.

12. Blade according to the preceding claim, wherein the one sensor comprises plural sensors (523, 549, 547), in particular an array or grid of sensors, the plural sensors comprising at least one group of sensors being arranged at a substantially same radial position but at different circumferential positions.

13. Blade according to one of the preceding claims 11 or 12, wherein at least one temperature sensor comprises a thermal sensitive material, wherein a resistivity of the material is a function of the temperature.

14. Wind turbine (500), comprising:

at least one blade (511) according to one of claims 11 to 13 and/or
an arrangement (501) according to claim 10.

## FIG 1

## FIG 2

FIG 3

EP 3 457 146 A1

FIG 4

# FIG 5

Europäisches
Patentamt

European
Patent Office

Office européen
des brevets

**EUROPEAN SEARCH REPORT**

Application Number

EP 17 19 0855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/140953 A1 (SANTOS PEDRO ARSUAGA [ES]) 10 June 2010 (2010-06-10) | 1-5, 10-14 | INV. G01P5/10 G01P13/00 |
| Y | * paragraph [0001] * <br> * paragraph [0019] - paragraph [0020] * <br> * paragraph [0024] - paragraph [0027] * <br> ----- | 6,7 | |
| X | DE 10 2006 041461 A1 (SIEMENS AG [DE]) 20 March 2008 (2008-03-20) <br> * paragraph [0006] * <br> * paragraph [0045] * <br> * paragraph [0055] - paragraph [0057] * <br> ----- | 1-5, 10-12,14 | |
| Y | US 4 968 879 A (CLARK LARRY T [US]) 6 November 1990 (1990-11-06) <br> * column 3, line 28 - line 47 * <br> * column 7, line 23 - line 49 * <br> * claims 1,7 * <br> ----- | 6,7 | |

TECHNICAL FIELDS SEARCHED (IPC)

G01P
F03D

~~The present search report has been drawn up for all claims~~

| Place of search | Date of completion of the search | Examiner |
|---|---|---|
| Munich | 16 January 2018 | Rabenstein, Winfried |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .............................................................................................

& : member of the same patent family, corresponding
    document

EPO FORM 1503 03.82 (P04C01)

Europäisches
Patentamt

European
Patent Office

Office européen
des brevets

**Application Number**

EP 17 19 0855

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7, 10-14

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 17 19 0855

The Search Division considers that the present European patent application does not comply with the
requirements of unity of invention and relates to several inventions or groups of inventions, namely:

1. claims: 1-7, 10-14

   Determining the direction of an air flow close to a surface
   of a rotating blade of a wind turbine based on multiple
   temperature measurements and the determination of the
   location where the highest temperature value is obtained.
   ---

2. claim: 8

   Determining the speed of an air flow close to a surface of a
   rotating blade of a wind turbine based on the maximum
   difference between independent temperature measurements and
   the ambient temperature.
   ---

3. claim: 9

   Determining the laminar to turbulent transition point of an
   airflow close to a surface of a rotating blade of a wind
   turbine based on multiple temperature measurements at
   different locations of a surface.
   ---

**ANNEX TO THE EUROPEAN SEARCH REPORT
ON EUROPEAN PATENT APPLICATION NO.**

EP 17 19 0855

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2018

| Patent document cited in search report | Publication date | Patent family member(s) | | Publication date |
|---|---|---|---|---|
| US 2010140953 A1 | 10-06-2010 | CN | 101930010 A | 29-12-2010 |
| | | DK | 2267460 T3 | 22-04-2014 |
| | | EP | 2267460 A2 | 29-12-2010 |
| | | ES | 2456870 T3 | 23-04-2014 |
| | | US | 2010140953 A1 | 10-06-2010 |
| DE 102006041461 A1 | 20-03-2008 | NONE | | |
| US 4968879 A | 06-11-1990 | NONE | | |

EPO FORM P0459

For more details about this annex : see Official Journal of the European Patent Office, No. 12/82